# EUROPÄISCHE PATENTSCHRIFT

(11) **EP 0 654 627 B1**
(45) Veröffentlichungstag und Bekanntmachung des Hinweises auf die Patenterteilung: **22.07.1998**
(21) Anmeldenummer: 94117647.1
(22) Anmeldetag: 09.11.1994
(51) Int. Cl.: F16K 31/06, F16K 27/02

(54) **Magnetventil**
Solenoid valve
Soupape magnétique

(30) Priorität: 23.11.1993 DE 9317864 U
(43) Veröffentlichungstag der Anmeldung: 24.05.1995
(73) Patentinhaber: Binder Magnete GmbH, 78048 Villingen-Schwenningen (DE)
(72) Erfinder: Blaffert, Wolfgang, Dipl.-Ing., D-78628 Rottweil (DE); Oesterle, Hans-Peter, Dipl.-Ing., D-78609 Tuningen (DE); Schäfer, Heinz, Dipl.-Ing., D-78048 VS-Villingen (DE); Bürk, Wolfgang, Dipl.-Ing., D-78054 VS-Schwenningen (DE)
(74) Vertreter: Patentanwälte Westphal, Buchner, Mussgnug Neunert, Göhring

(56) Entgegenhaltungen:
- WO-A-85/01561
- DE-U- 8 901 144
- US-A- 4 830 332

## Beschreibung

Die Erfindung betrifft ein Magnetventil gemäß dem Oberbegriff des Anspruchs 1.

Ein solches Magnetventil ist beispielsweise aus WO 85/01561 bekannt. Das dort beschriebene Magnetventil weist einen innerhalb eines aus Kunststoff bestehenden Ventilsitzes angeordneten kugelförmigen Ventilkörper und einen zylindrischen Gehäusemantel auf. Innerhalb dieses Gehäusemantels ist eine Erregerspule auf einen Spulenkörper, der regelmäßig aus Kunststoff besteht, gewickelt. Der Spulenkörper verfügt über eine axiale Durchgangsöffnung, in welcher eine Ankereinrichtung in Form eines mit einem Anker verbundenen Stößels angeordnet ist. Der kugelförmige Ventilkörper ist dabei über die Ankereinrichtung so betätigbar, daß das kugelförmige Ventilglied durch die Kraft einer Druckfeder auf einem Dichtsitz aufliegt. Wird die Erregerspule von Strom durchflossen und damit erregt, so gibt der Ventilkörper den Dichtsitz frei, wodurch das Ventil öffnet und ein gasförmiges oder flüssiges Medium durch das Magnetventil fliessen kann. Der Vorteil solcher Magnetventile liegt darin, daß aufgrund eines geringen Ventilhubes innerhalb des Magnetventiles eine schnelle Schaltfolge möglich ist.

Da solche Magnetventile in großem Umfang beispielsweise in der Automobiltechnik zur pneumatischen Druck- bzw. Unterdrucksteuerung (z. B. Abgasrückführung, Getriebeschaltpunkt, Anhebung etc.) eingesetzt werden, ist die Automobilzulieferindustrie bestrebt, solche Magnetventile in möglichst einfacher Weise und damit kostengünstig herzustellen.

Ein ähnliches in der US-PS 4,951,703 beschriebene Magnetventil weist ein zylindrisches Gehäuse für den elektrischen Teil des Magnetventiles auf. Dieses Gehäuse ist mit einer metallischen Ummantelung versehen. Der Ventilsitz des Magnetventiles ist stirnseitig mit diesem Gehäuse derart in Verbindung, daß er im Gehäuse des elektrischen Teiles des Magnetventiles eingeklemmt gehalten ist. Hierfür weist der Ventilsitz an seiner dem elektrischen Teil zugewandten Stirnseite des Magnetventiles einen ringförmigen, flanschartig ausgebildeten Ansatz auf, der an einem Führungselement innerhalb des elektrischen Teiles des Magnetventiles flächig anliegt. Die metallische Gehäusewandung des elektrischen Teiles des Magnetventiles weist an seiner dem Ventilsitz zugewandten Öffnung eine Schulter auf, welche den ringförmigen und flanschartigen Ansatz des Ventilsitzes so übergreift, daß eine Klemmverbindung hergestellt wird. Ein derartiges Magnetventil ist verhältnismäßig schwierig zu montieren.

Ein im deutschen Gebrauchsmuster G 89 01 144.9 beschriebenes Magnetventil verfügt in seinem elektrischen Teil über ein topfförmiges, metallisches Gehäuse. Innerhalb dieses Gehäuses ist auf einem Spulenkörper eine Erregerspule aufgewikkelt und eine Ankereinrichtung samt kugelförmigen Ventilkörper angeordnet. Die Einzelteile innerhalb des topfförmigen Gehäuseteiles werden in einer Montagevorrichtung vormontiert und mit Kunststoff umspritzt. Dabei wird an dem dem Ventilsitz zugewandten Ende ein zylindrischer Fortsatz aus Kunststoff angeformt, an den ein ebenfalls aus Kunststoff bestehendes Anschlußteil für den Ventilsitz durch Ultraverschweißung angefügt wird. Innerhalb dieses Anschlußteiles sind Bohrungen angeordnet, die durch den kugelförmigen Ventilkörper abdichtend verschließbar sind. Problematisch bei dieser Ausgestaltung eines Magnetventiles ist, daß das topfförmige Gehäuseteil in einem eigenen Arbeitsgang mit Kunststoff umspritzt werden muß.

Der vorliegenden Erfindung liegt deshalb die Aufgabe zugrunde, ein Magnetventil der eingangs genannten Art so weiterzubilden, daß ein im Vergleich zum Stand der Technik geringerer Bauelementeaufwand notwendig und eine äußerst einfache Montage des Magnetventiles möglich ist.

Diese Aufgabe wird durch die Merkmale des Anspruchs 1 gelöst.

Weiterbildungen der Erfindung sind Gegenstand der Unteransprüche.

Die Erfindung beruht also im wesentlichen darauf, daß auch der Ventilsitz des Magnetventiles aus Kunststoff besteht und der Spulenkörper einen in Richtung zum Ventilsitz angeformten Ansatz aufweist. Der Ventilsitz ist dabei stirnseitig an den Ansatz des Spulenkörpers angeschweißt.

Durch diese erfindungsgemäße Maßnahme muß lediglich der ohnehin notwendige Spulenkörper an seiner dem Ventilsitz zugewandten Seite mit einer geeigneten Verlängerung versehen werden, an die dann der Ventilsitz angeschweißt wird. Bei der Erfindung wird die Tatsache ausgenutzt, daß der Spulenkörper bereits aus Kunststoff besteht und daher eine Schweißverbindung zwischen dem Ventilsitz aus Kunststoff und dem Spulenkörper ohne weiteres möglich ist.

Obwohl es grundsätzlich möglich ist, den Ventilsitz auf beliebige Weise an der Stirnseite des Spulenkörpers zu befestigen, hat es sich als günstig erwiesen, diese Befestigung in Form einer Ultraschweißverbindung vorzusehen.

Darüber hinaus ist es vorteilhaft, an der dem Ventilsitz zugewandten Stirnseite des Spulenkörpers und damit an der gegenüberliegenden Stirnseite des Ansatzes des Spulenkörpers eine ringförmige Ausnehmung bzw. Nut auszubilden, in die ein entsprechender ringförmiger Vorsprung des Ventilsitzes, der für eine Paßverbindung geeignet ist, eingesetzt wird. Hierdurch wird eine besonders gute mechanische Stabilität der Verbindung zwischen Ventilsitz und Spulenkörper erreicht.

Es ist zweckmäßig, den Ansatz des Spulenkörpers an seiner äußeren Umlauffläche mit einer ringförmigen Nut zur Aufnahme eines Dichtungsringes auszubilden. Wird in diese ringförmige Nut eine geeignete Dichtung, beispielsweise in Form eines O-Ringes, eingesetzt, kann bei der Montage des Magnetventiles eine gute Abdichtung erreicht werden.

Die für eine Abdichtung mittels eines O-Ringes erforderliche ringförmige Nut kann auch durch eine geeignete Anpassung von Spulenkörper und Ventilsitz gebildet werden. Die äußere Kontur von Ventilsitz und Spulenkörper ist hierfür so gewählt, daß beim Anschweißen des Ventilsitzes an den Spulenkörper ein ringförmiger Spalt am Übergang von Ventilsitz und Spulenkörper verbleibt, in welchen der O-Ring einsetzbar ist.

Ein besonders einfacher Aufbau des erfindungsgemäßen Magnetventiles wird auch dadurch erreicht, daß die Ankereinrichtung einen Anker und einen mit dem Anker verbundenen Stößel aufweist. Der Anker und stößel sind dabei nicht starr miteinander verbunden. Der Stößel wird in der Bohrung des Ankers aufgenommen, geführt und gelagert. Der Vorteil dieser mechanischen Entkopplung liegt darin, daß die mechanische Belastung der Stößelspitze beim Abschalten der Erregerwicklung um ein Vielfaches gegenüber einer starren Verbindung verringert wird. Der Ankerhub ist so etwa zum Beispiel 0,2 mm größer als der Stößelhub. Der Stößelhub wird durch den Ventilsitz begrenzt, wodurch der Anker den beispielsweise um etwa 0,2 mm verlängerten Hub ausführen kann. Der Anker selbst wird durch einen Ausschlag im Spulenkörper begrenzt.

Der Stößel ist zum Betätigen des kugelförmigen Ventilkörpers vorgesehen. Ist zudem auf einer dem Ventilsitz abgewandten Stirnseite des Spulenkörpers ein flanschartig ausgebildeter Polkern angeordnet, so daß ein Teil des Polkerns in die axiale Durchgangsöffnung des Spulenkörpers ragt und der Ankereinrichtung gegenüberliegt, ergibt sich ein äußerst gedrungener Aufbau des erfindungsgemäßen Magnetventiles. Hierfür ist es zweckmäßig, diesen Teil des Polkerns mit einer Öffnung zu versehen, innerhalb welcher eine Druckfeder angeordnet ist, durch die axialer Druck auf die Ankereinrichtung zur Betätigung des Ventilkörpers ausübbar ist.

Darüber hinaus ist es günstig, den Spulenkörper samt Ansatz und den Ventilsitz jeweils aus dem gleichen Kunststoffmaterial herzustellen. Dies erlaubt eine besonders gute Schweißverbindung, da sowohl Ventilsitz und Spulenkörper aufgrund des gleichen Kunststoffmateriales die gleichen Erwärmungseigenschaften bzw. Schmelzeigenschaften zeigen.

In einer anderen Weiterbildung der Erfindung ist es vorgesehen, innerhalb des Ansatzes des Spulenkörpers eine metallische Platte anzuordnen, die orthogonal zur axialen Öffnung des Spulenkörpers liegt und einen Durchmesser aufweist, der mindestens gleich dem äußeren Durchmesser der Erregerspule ist. Diese metallische Platte kann beispielsweise ein Stanzteil sein. Die metallische Platte dient zur Magnetfeldführung des beim Bestromen der Erregerspule auftretenden Magnetfeldes. Das gesamte Magneteisensystem des Magnetventiles wird aus dieser metallischen Platte, ein um die Erregerspule herum angeordnetes, zylindrisches und metallisches Gehäuse und einer bodenseitigen, der metallischen Platte gegenüberliegenden Abschlußplatte gebildet.

Aus Gründen einer möglichst einfachen Herstellbarkeit des erfindungsgemäßen Magnetventiles kann diese bodenseitige Platte auch durch den bereits erwähnten Polkern gebildet sein. Hierfür weist der Polkern erfindungsgemäß auf seiner dem Ventilsitz abgewandten Stirnseite eine bis zum zylindrischen Gehäusemantel reichende Wandung auf. Diese Wandung des Polkerns wird mit dem zylindrischen Gehäusemantel verstemmt verbunden.

Die Erfindung wird im folgenden anhand eines Ausführungsbeispiels im Zusammenhang mit einer Figur eingehend erläutert.

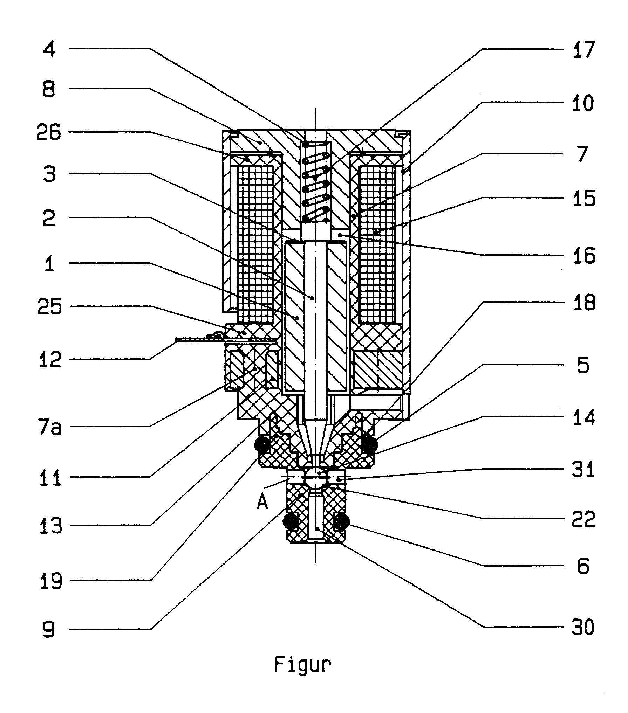

Das in der Figur gezeigte Ausführungsbeispiel eines erfindungsgemäßen Magnetventiles in Schnittdarstellung weist einen Spulenkörper 7 mit einer axialen Durchgangsöffnung 16 auf. Um den Spulenkörper 7 ist eine Erregerspule 15 gewickelt. Die Erregerspule 15 ist dabei von sich radial zur axialen Durchgangsöffnung des Spulenkörpers erstreckenden Begrenzungsabschnitten 25, 26 des Spulenkörpers 7 oben und unten begrenzt.

Der Spulenkörper 7 ist an seiner dem unteren Begrenzungsabschnitt 25 zugewandten Seite mit einem Ansatz 7a versehen, der sich - wie nachfolgend noch zu erläutern sein wird - bis nahe an einen kugelförmigen Ventilkörper 14 innerhalb eines Ventilsitzes 9 erstreckt. Innerhalb der axialen Durchgangsöffnung 16 des Spulenkörpers ist eine Ankereinrichtung in Form eines Ankers 1 und eines mit dem Anker 1 nicht starr verbundenen Stößels 2 angeordnet. Der Stößel 2 ist in einer axialen Bohrung des Ankers 1 aufgenommen und darin axialführend gelagert. Der bereits erwähnte kugelförmige Ventilkörper 14 ist vom Stößel 2 betätigbar. Der Stößel 2 ist in der Darstellung der Figur länger als der Anker 1. Auf der dem kugelförmigen Ventilsitz 14 zugewandten Seite ist der Stößel 2 mit einer sich konisch verjüngenden Verlängerung und auf der dazu gegenüberliegenden Seite mit einem Abschnitt größeren Durchmessers versehen. Gegenüberliegend zu diesem dickeren Abschnitt des Stößels 2 ist eine Druckfeder 4 derart angeordnet, daß diese bei unbestromter Erregerspule 15 derartig Druck auf den Stößel 2 ausübt, daß dessen konische Verlängerung den kugelförmigen Ventilkörper 14 abdichtend gegen eine Öffnung eines Dichtsitzes 22 drückt. Die Druckfeder 4 sitzt hierfür in einer axialen Öffnung eines Polkernes 8, der flanschartig ausgebildet ist. Der Teil des Polkernes 8 mit der darin angeordneten zentralen Öffnung 17 für die Druckfeder 4 ragt in die axiale Durchgangsöffnung 16 des Spulenkörpers 7 und liegt dem Anker 1 samt Stößel 2 gegenüber. Im Zwischenraum von Anker 1 und Polkern 8 ist eine Scheibe 3 auf dem Anker 1 liegend angeordnet. Zusätzlich ist der Polkern 8 mit einer bis zu einer zylindrischen Gehäusewandung 10 reichenden Wandung versehen, welche am sich radial erstreckenden Begrenzungsabschnitt 26 des Spulenkörpers 7 anliegt. Diese Wandung des Polkerns 8 ist mit dem zylindrischen Gehäusemantel 10 mittels einer Stemmverbindung verbunden.

Die zylindrische Gehäusewandung 10 umschließt die Erregerspule 15 und den Spulenkörper 7, wobei ein Teil des Ansatzes 7a aus der zylindrischen Gehäusewandung 10 in Richtung zum Ventilsitz 9 herausragt.

Im Ansatz 7a ist eine metallische Platte 11 angeordnet, die sich orthogonal zur axialen Öffnung 16 des Spulenkörpers 7 erstreckt und einen Durchmesser aufweist, der mindestens gleich dem äußeren Durckmesser der Erregerspule 15 ist. Die Platte 11 weist eine zentrale Öffnung auf, die etwas größer als der Durchmesser der axialen Durchgangsöffnung 16 des Spulenkörpers 7 ist. Der Ansatz 7a des Spulenkörpers 7 umschließt die metallische Platte 11 vollständig. An seinem vorderseitigen Stirnende ist die äußere Umfangsfläche des Ansatzes 7a in Richtung zum Ventilsitz 9 verjüngt ausgebildet. Eine ring- förmige Nut 18 zur Aufnahme einer Dichtung in Form eines O-Ringes 5 ist gemäß der Darstellung der Figur am Übergang vom Ventilsitz 9 und Ansatz 7a des Spulenkörpers 7 ausgebildet.

Die stirnseitige Wandung des Ansatzes 7a des Spulenkörpers 7 ist mit einer ringförmigen Ausnehmung 13 versehen. In diese ringförmige Ausnehmung 13 greift nach Art einer Paßverbindung ein ringförmiger Vorsprung 19 des aus Kunststoff hergestellten Ventilsitzes 9 ein. Der Ventilsitz 9 ist dabei mit dem Ansatz 7a des Spulenkörpers 7 über eine Schweißverbindung, vorteilhafterweise eine Ultraschweißverbindung, angeschlossen. Der Ventilsitz 9 und der Spulenkörpers 7 bestehen vorzugsweise aus dem gleichen Kunststoffmaterial.

Der Ventilsitz 9 weist in dem Ausführungsbeispiel der Figur eine auf der gleichen Achse wie der Stößel 2 liegende axiale Bohrung 30 auf. Zusätzlich ist im ventilsitz 9 eine mit dieser axialen Bohrung 30 in Verbindung stehende radiale Bohrung 31 angeordnet. An der Verbindung der axialen Bohrung 30 und der radialen Bohrung 31 ist eine kammerartige Öffnung zur Aufnahme des kugelförmigen Ventilkörpers 14 vorgesehen. Der kugelförmige Ventilkörper 14 ist in diesem Ausführungsbeispiel eine Kugel, die vom Stößel 2 bei unbestromter Erregerspule 15 gegen den Dichtsitz 22 der axialen Bohrung 30 gedrückt wird, so daß ein sicherer Verschluß des Dichtsitzes 22 erreicht wird.

Bei Bestromung der Erregerspule 15 wird der Anker 1 samt Stößel 2 gegen die Kraft der Druckfeder 4 bewegt, so daß der kugelförmige Ventilkörper 14 den Dichtsitz 22 freigibt und eine Verbindung zwischen der axialen Bohrung 30 und der radialen Bohrung 31 hergestellt wird.

Der Vollständigkeit halber ist noch zu erwähnen, daß das in der Figur dargestellte erfindungsgemäße Magnetventil mit einer Kontaktiereinrichtung 12 versehen ist, um der Erregerspule 15 Strom zuzuführen. Die Kontaktiereinrichtung 12 kann beispielsweise die in der Figur dargestellte Kontaktfeder sein. Schließlich ist in einer ringförmigen Nut an der außen umlaufenden Fläche des Ventilsitzes 9 im Bereich der axialen Bohrung 30 ein weiterer O-Ring 6 für eine abdichtende Montage des Magnetventiles vorgesehen.

### BEZUGSZEICHENLISTE

- 1: Anker
- 2: Stößel
- 3: Scheibe
- 4: Druckfeder
- 5: O-Ring
- 6: O-Ring
- 7: Spulenkörper
- 7a: Ansatz des Spulenkörpers
- 8: Polkern
- 9: Ventilsitz
- 10: Gehäusewandung
- 11: Platte
- 12: Kontaktfeder
- 13: Ausnehmung
- 14: Ventilkörper
- 15: Erregerspule
- 16: axiale Durchgangsöffnung
- 17: Öffnung
- 18: Nut
- 19: Vorsprung
- 22: Dichtsitz
- 25: Begrenzungsabschnitt
- 26: Begrenzungsabschnitt
- 30: axiale Bohrung
- 31: radiale Bohrung

## Patentansprüche

1. Magnetventil mit einem innerhalb eines aus Kunststoff bestehenden Ventilsitzes (9) angeordneten kugelförmigen Ventilkörper (14) und mit einem zylindrischen Gehäusemantel (10) innerhalb dem eine Erregerspule (15) auf einem Spulenkörper (7) aus Kunststoff gewickelt und in einer axialen Durchgangsöffnung (16) des Spulenkörpers (7) eine Ankereinrichtung (1, 2) angeordnet ist, und wobei der kugelförmige Ventilkörper (14) über die Ankereinrichtung (1, 2) betätigbar ist, dadurch gekennzeichnet, daß der Spulenkörper (7) einen in Richtung zum Ventilsitz (9) angeformten Ansatz (7a) aufweist, an den stirnseitig der Ventilsitz (9) angeschweißt ist.

2. Magnetventil nach Anspruch 1, dadurch gekennzeichnet, daß der Ventilsitz (9) stirnseitig mit dem Ansatz (7a) des Spulenkörpers (7) durch eine Ultraschweißverbindung angefügt ist.

3. Magnetventil nach Anspruch 1 oder 2, dadurch gekennzeichnet, daß zwischen dem Ansatz (7a) des Spulenkörpers (7) und dem Ventilsitz (9) eine ringförmige Nut (18) zur Aufnahme eines Dichtungsringes (5) angeordnet ist.

4. Magnetventil nach einem der Ansprüche 1 bis 3, dadurch gekennenzeichnet, daß auf einer dem Ventilsitz (9) abgewandten Stirnseite des Spulenkörpers (7) ein flanschartig ausgebildeter Polkern (8) angeordnet ist, daß ein Teil dieses Polkerns (8) in die axiale Durchgangsöffnung (16) des Spulenkörpers (7) ragt und der Ankereinrichtung (1, 2) gegenüberliegt, und daß dieser Teil des Polkerns (8) mit einer zentralen Öffnung (17) versehen ist, innerhalb der eine Druckfeder (4) angeordnet ist, durch die axialer Druck auf die Ankereinrichtung (1, 2) zur Betätigung des Ventilkörpers (14) ausübbar ist.

5. Magnetventil nach einem der Ansprüche 1 bis 4, dadurch gekennzeichnet, daß die Ankereinrichtung (1, 2) einen Anker (1) und einen mit dem Anker feststehend verbundenen Stößel (2) aufweist, und daß der Stößel (2) zum Betätigen des kugelförmigen Ventilkörpers (14) vorgesehen ist.

6. Magnetventil nach einem der Ansprüche 1 bis 5, dadurch gekennzeichnet, daß der Spulenkörper (7) auf seiner dem Ventilsitz (9) zugewandten Stirnseite mit einer ringförmigen Ausnehmung (13) versehen ist, in welcher ein ringförmiger Vorsprung (19) des Ventilsitzes (9) mittels einer Paßsitzverbindung einsetzbar ist.

7. Magnetventil nach einem der Ansprüche 1 bis 6, dadurch gekennzeichnet, daß der Ventilsitz (9) und Spulenkörper (7) aus einem gleichen Kunststoffmaterial bestehen.

8. Magnetventil nach einem der Ansprüche 1 bis 6, dadurch gekennzeichnet, daß innerhalb des Ansatzes (7a) und des Spulenkörpers (7) und orthogonal zur axialen Durchgangsöffnung (16) des Spulenkörpers (7) eine metallische Platte (11) angeordnet ist, und daß die Platte (11) einen Durchmesser aufweist, der mindestens gleich dem Außendurchmesser der Erregerspule (15) entspricht.

9. Magnetventil nach Anspruch 8, dadurch gekennzeichnet, daß die Platte (11) ein Stanzteil oder Sinterteil ist.

10. Magnetventil nach einem der Ansprüche 1 bis 9, dadurch gekennzeichnet, daß der Polkern (8) auf einer dem Ventilsitz (9) abgewandten Stirnseite mit einer sich bis zum zylindrischen Gehäusemantel (10) erstreckenden Wandung versehen ist, und daß die Wandung des Polkerns (8) eine stirnseitige Begrenzung des Magnetventils bildet und mit dem zylindrischen Gehäusemantel (10) durch eine Verstemmung verbunden ist.

## Claims

1. A solenoid valve having a spherical valve body (14) disposed inside a valve seat (9) made from plastics and having a cylindrical housing shell (10) inside which an exciting coil (15) is wound on a coil shell (7) made from plastics and is disposed in an axial through-aperture (16) of the coil shell (7), and wherein the spherical valve body (14) can be actuated via the armature device (1, 2),
**characterised in that** the coil shell (7) comprises a projection (7a) which is moulded on in the direction of the valve seat (9), to which the valve seat (9) is welded at the end side.

2. A solenoid valve according to Claim 1,
**characterised in that** the valve seat is attached at the end side to the projection (7a) of the coil shell (7) by an ultrasonic welded joint.

3. A solenoid valve according to Claim 1 or 2,
**characterised in that** disposed between the projection (7a) of the coil shell (7) and the valve seat (9) is an annular groove (18) for housing a sealing ring (5).

4. A solenoid valve according to one of Claims 1 to 3,
**characterised in that** disposed on one end side of the coil shell (7) faced away from the valve seat (9) is a pole core (8) having a flange-type construction,
**in that** a part of this pole core (8) projects into the axial through-aperture (16) of the coil shell (7) and lies opposite the armature device (1, 2),
**and in that** this part of the pole core (8) is provided with a central aperture (17), inside which a pressure spring (4) is disposed, by which axial pressure can be exerted on the armature device (1, 2) to actuate the valve body (14).

5. A solenoid valve according to one of Claims 1 to 4,
**characterised in that** the armature device (1, 2) comprises an armature (1) and a stem (2) securely connected to the armature,
and in that the stem (2) is provided to actuate the spherical valve body (14).

6. A solenoid valve according to one of Claims 1 to 5,
**characterised in that** the coil shell (7) is provided on its end side faced towards the valve seat (9) with an annular recess (13), in which an annular protuberance (19) of the valve seat (9) can be inserted by means of a snug fit connection.

7. A solenoid valve according to one of Claims 1 to 6,
**characterised in that** the valve seat (9) and coil shell (7) are made from the same plastics material.

8. A solenoid valve according to one of Claims 1 to 6,
**characterised in that** a metal plate (11) is disposed inside the projection (7a) and the coil shell (7) and orthogonally to the axial through-aperture (16) of the coil shell (7),
**and in that** the plate (11) has a diameter which is at least equal to the external diameter of the exciting coil (15).

9. A solenoid valve according to Claim 8,
**characterised in that** the plate (11) is a stamped product or sintered product.

10. A solenoid valve according to one of Claims 1 to 9,
**characterised in that** on one end side faced away from the valve seat (9) the pole core (8) is provided with a wall extending up to the cylindrical housing shell (10),
**and in that** the wall of the pole core (8) forms an end limitation of the solenoid valve and is connected to the cylindrical housing shell (10) by a caulked joint.

## Revendications

1. Soupape magnétique comprenant un corps de soupape (14) de forme sphérique logé dans un siège (9) en matière plastique ainsi qu'une enveloppe cylindrique de boîtier (10) à l'intérieur de laquelle est enroulée une bobine d'excitation (15) sur un corps de bobine (7) en matière plastique, percé d'une ouverture de passage axial (16) dans laquelle est logé un dispositif d'induit (1, 2) qui peut actionner le corps de soupape (14),
caractérisée en ce que
le corps de soupape (7) comporte un appendice moulé (7a) dirigé vers le siège de soupape (9) et sur la face frontale duquel est soudé le siège de soupape (9).

2. Soupape magnétique selon la revendication 1,
caractérisée en ce que
le siège de soupape (9) est raccordé frontalement à l'appendice (7a) du corps de soupape (7), par une soudure aux ultrasons.

3. Soupape magnétique selon la revendication 1,
caractérisée en ce qu'
il existe, entre l'appendice (7a) du corps de bobine (7) et le siège de soupape (9), une gorge annulaire (18) pour loger un anneau d'étanchéité (5).

4. Soupape magnétique selon une des revendications 1 à 3,
caractérisée en ce que
sur la face frontale du corps de bobine (7) éloignée du siège de soupape (9) est monté un noyau polaire (8) à bride dont une partie pénètre dans l'ouverture de passage axial (16) du corps de bobine (7) et vient en face du dispositif d'induit (1, 2), cette partie étant percée d'une ouverture centrale (17) dans laquelle est logé un ressort de poussée pouvant exercer une poussée axiale sur le dispositif d'induit (1, 2) pour actionner le corps de soupape (14).

5. Soupape magnétique selon une des revendications 1 à 4,
caractérisée en ce que
le dispositif d'induit (1, 2) comprend un induit (1) et un poussoir (2) solidaire de l'induit, ce poussoir étant prévu pour actionner le corps de soupape (14) de forme sphérique.

6. Soupape magnétique selon une des revendications 1 à 5,
caractérisée en ce que
le corps de soupape (7) présente sur sa face frontale proche du siège de soupape (9), un évidement dans lequel peut être introduite une saillie annulaire (19) du siège de soupape, par l'intermédiaire d'une liaison ajustée.

7. Soupape magnétique selon une des revendications 1 à 6,
caractérisée en ce que
le siège de soupape (9) et le corps de bobine (7) sont faits de la même matière plastique.

8. Soupape magnétique selon une des revendications 1 à 6,
caractérisée en ce qu'
à l'intérieur de l'appendice (7a) et du corps de soupape (7), et perpendiculairement à l'ouverture de passage axial (16) de ce corps, est montée une plaque métallique (11) qui présente un diamètre au moins égal au diamètre extérieur de la bobine d'excitation (15).

9. Soupape magnétique selon la revendication 8,
caractérisée en ce que
la plaque (11) est une pièce découpée ou frittée.

10. Soupape magnétique selon une des revendications 1 à 9,
caractérisée en ce que
le noyau polaire (8), sur sa face frontale éloignée du siège de soupape (9) présente une paroi s'étendant jusqu'à l'enveloppe cylindrique du boîtier (10), cette paroi formant la limite frontale de la soupape en étant raccordée à l'enveloppe (10) par matage.
